# EUROPEAN PATENT APPLICATION

(11) **EP 4 746 159 A1**
(43) Date of publication of application: **20.05.2026**
(21) Application number: 24925455.8
(22) Date of filing: 16.08.2024
(51) Int. Cl.: H01M 50/291

(54) **BATTERY AND ELECTRIC APPARATUS**

(30) Priority: 23.02.2024 CN 202420334454 U
(71) Applicant: Contemporary Amperex Technology Co., Limited, Ningde, Fujian 352100 (CN)
(72) Inventor: WU, Kai, Ningde, Fujian 352100 (CN); SHEN, Dan, Ningde, Fujian 352100 (CN); WU, Shaoji, Ningde, Fujian 352100 (CN); CHEN, Shilong, Ningde, Fujian 352100 (CN); LI, Yao, Ningde, Fujian 352100 (CN)
(74) Representative: Kraus & Lederer PartGmbB
(86) International application number: PCT/CN2024/112839
(87) International publication number: WO 2025/175713

(57) **Abstract**

A battery (10) and an electric apparatus. Specifically, the battery (10) comprises: a first battery cell (31) and a second battery cell (32) which are adjacent to each other, and a functional component (33), wherein the functional component (33) is disposed in a gap formed by a first surface (311) of the first battery cell (31) and a second surface (321) of the second battery cell (32); filling components (34) and/or a first isolating component (351), the filling components (34) filling edges of the gap, and the first isolating component (351) being tightly attached to an edge of a third surface (312) of the first battery cell (31) and a fourth surface (322) of the second battery cell (32), and covering the gap formed by the first surface (311) and the second surface (321). The third surface (312) intersects with the first surface (311), and the fourth surface (322) intersects with the second surface (321). The solution of the embodiments can lower the probability of insulation problems, thermal runaway, or other such issues occurring in battery cells (31), thus improving overall battery (10) performance.

## Description

### CROSS-REFERENCE TO RELATED APPLICATIONS

The present application claims priority to Chinese Patent Application No. 202420334454.1, entitled "BATTERY AND ELECTRIC APPARATUS" and filed on February 23, 2024, which is incorporated herein by reference in its entirety.

### TECHNICAL FIELD

The present application relates to the technical field of batteries, and in particular relates to a battery and an electric apparatus.

### BACKGROUND

Energy conservation and emission reduction are the key to sustainable development of the automobile industry. In this case, electric vehicles have become an important part of sustainable development of the automobile industry due to their advantages of energy conservation and environmental friendliness. For electric vehicles, battery technology is an important factor related to the development thereof.

However, during charging and discharging of a battery, the internal temperature of the battery increases, and problems such as thermal runaway may occur, affecting the use of the battery and user experience. Therefore, how to lower the probability of thermal runaway of batteries is an urgent problem to be solved in the battery technology.

### SUMMARY

Embodiments of the present application provide a battery and an electric apparatus, which can lower the probability of problems such as insulation and thermal runaway occurring in a battery cell, thus improving the overall performance of the battery.

According to a first aspect, a battery is provided, including: a first battery cell and a second battery cell adjacent to each other, a functional component, and filling components and/or a first isolating component. The functional component is arranged in a gap formed by a first surface of the first battery cell and a second surface of the second battery cell. The filling components fill edges of the gap. The first isolating component is tightly attached to an edge of a third surface of the first battery cell and an edge of a fourth surface of the second battery cell, and covers the gap formed by the first surface and the second surface. The third surface intersects with the first surface, and the fourth surface intersects with the second surface.

In the embodiments of the present application, the gap between the adjacent battery cells is filled with the filling components, and/or the gap between the adjacent battery cells is covered with the isolating component, so that the probability of particles falling into the gap between the battery cells can be lowered, and the probability of problems such as insulation and thermal runaway occurring in the battery cells can be lowered, thus improving the overall performance of the battery.

In some embodiments, the filling components fill other areas in the gap than an area occupied by the functional component.

In the embodiments of the present application, the filling components are arranged in the other areas than the area occupied by the functional component to completely fill the gap between two adjacent battery cells. In this way, the expansion uniformity of the battery cells can be improved, and further the cycle performance of the battery is improved. Meanwhile, the probability of emitted particles or the like falling into the gap between two adjacent battery cells after thermal runaway occurs in one battery cell can be lowered, and the probability of problems such as insulation and thermal runaway occurring in the battery cells can be lowered, thus improving the overall performance of the battery.

In some embodiments, a pressure relief mechanism is arranged on the third surface of the first battery cell, and/or a pressure relief mechanism is arranged on the fourth surface of the second battery cell. The filling components and/or the first isolating component is arranged close to the pressure relief mechanism relative to the functional component.

In the embodiments of the present application, the pressure relief mechanism is arranged on the third surface of the first battery cell, and/or the pressure relief mechanism is arranged on the fourth surface of the second battery cell, and the filling components and/or the first isolating component is arranged close to the pressure relief mechanism relative to the functional component. In this way, after thermal runaway occurs in the battery cells, the probability of particles or the like emitted by the pressure relief mechanism falling into the gap between two adjacent battery cells can be significantly lowered, and the probability of problems such as insulation and thermal runaway occurring in the battery cells can be lowered, thus improving the overall performance of the battery.

In some embodiments, the melting point of the filling components and/or the first isolating component is greater than or equal to 100°C. Thus, in the embodiments of the present application, the melting point of the filling components and/or the first isolating component is set to greater than or equal to 100°C. In this way, when thermal runaway occurs in the battery cells, the probability of problems such as insulation and thermal runaway caused by emitted particles or the like falling between two adjacent battery cells can be effectively lowered, thus improving the overall performance of the battery.

In some embodiments, the filling components are arranged to protrude from the third surface of the first battery cell and/or the fourth surface of the second battery cell. Thus, in the embodiments of the present application, the filling components are arranged to protrude from the third surface of the first battery cell and/or the fourth surface of the second battery cell. In this way, the probability of emitted particles or the like falling into the gap between two adjacent battery cells in the case that thermal runaway occurs in the battery cells can be further lowered, and the probability of problems such as insulation and thermal runaway occurring in the battery cells can be lowered, thus improving the overall performance of the battery.

In some embodiments, a first electrode terminal is arranged on the third surface of the first battery cell, and/or a second electrode terminal is arranged on the fourth surface of the second battery cell. The filling components are arranged so as not to be higher than the first electrode terminal and/or the second electrode terminal.

In the embodiments of the present application, the first electrode terminal is arranged on the third surface of the first battery cell, and/or the second electrode terminal is arranged on the fourth surface of the second battery cell, and the filling components are arranged so as not to be higher than the first electrode terminal and/or the second electrode terminal. In this way, the impact of the filling components on the first electrode terminal and/or the second electrode terminal is reduced, and the processing and manufacturing of the battery are facilitated. Meanwhile, the probability of emitted high-temperature particles or the like falling into the gap between two adjacent battery cells in the case that thermal runaway occurs in the battery cells can be lowered, and the probability of problems such as insulation and thermal runaway occurring in the battery cells can be lowered, thus improving the overall performance of the battery.

In some embodiments, the filling components are arranged flush with the first electrode terminal and/or the second electrode terminal. Thus, in the embodiments of the present application, the filling components are arranged flush with the first electrode terminal and/or the second electrode terminal. In this way, the processing and manufacturing of the battery are facilitated, and the production costs are reduced.

In some embodiments, the functional component is arranged in a middle area between the first surface and the second surface. The filling components include a first filling component and a second filling component. The first filling component and the second filling component are arranged in at least one of two edge gaps between the first surface and the second surface.

In the embodiments of the present application, the first filling component and the second filling component are arranged in at least one of two edge gaps between the first surface and the second surface. In this way, the probability of emitted high-temperature particles or the like falling into the gap between two adjacent battery cells in the case that thermal runaway occurs in the battery cells can be significantly lowered, and the probability of problems such as insulation and thermal runaway occurring in the battery cells can be lowered, thus improving the overall performance of the battery.

In some embodiments, the first filling component is flush with the third surface and the fourth surface, and/or the second filling component is flush with a fifth surface of the first battery cell and a sixth surface of the second battery cell. The third surface is arranged opposite to the fifth surface, and the fourth surface is arranged opposite to the sixth surface.

In the embodiments of the present application, the filling components are arranged flush with the surfaces of the battery cells. In this way, the probability of emitted particles or the like falling into the gap between the two adjacent battery cells after thermal runaway occurs in one battery cell can be lowered, and the probability of problems such as insulation and thermal runaway occurring in the battery cells can be lowered, thus improving the overall performance of the battery. In addition, the manufacturing manner is simple and highly efficient, so as to facilitate the processing and manufacturing of the battery.

In some embodiments, the pressure relief mechanism is arranged on the third surface of the first battery cell, and/or the pressure relief mechanism is arranged on the fourth surface of the second battery cell. One of the first filling component and the second filling component is close to the pressure relief mechanism, and the other is far away from the pressure relief mechanism. The melting point of the one close to the pressure relief mechanism is higher than the melting point of the other far away from the pressure relief mechanism.

In the embodiments of the present application, one of the first filling component and the second filling component is close to the pressure relief mechanism, the other is far away from the pressure relief mechanism, and the melting point of the one close to the pressure relief mechanism is higher than the melting point of the other far away from the pressure relief mechanism. In this way, after thermal runaway occurs in the battery cells, the probability of particles or the like emitted by the pressure relief mechanism falling into the gap between two adjacent battery cells can be significantly lowered, and the probability of problems such as insulation and thermal runaway occurring in the battery cells can be lowered, thus improving the overall performance of the battery, and reducing the manufacturing costs of the battery.

In some embodiments, the battery further includes a second isolating component. The second isolating component is tightly attached to an edge of the fifth surface of the first battery cell and an edge of the sixth surface of the second battery cell, and covers the gap between the first surface and the second surface. The fifth surface intersects with the first surface, and the sixth surface intersects with the second surface. The third surface is arranged opposite to the fifth surface, and the fourth surface is arranged opposite to the sixth surface.

In the embodiments of the present application, the second isolating component is arranged to further cover the gap between the adjacent battery cells, so that fewer particles generated by thermal runaway or the like enters the gap between the adjacent battery cells, and also the probability of problems such as insulation and thermal runaway occurring in the battery cells can be lowered, thus further improving the overall performance of the battery.

In some embodiments, the first isolating component and/or the second isolating component is made of thermoplastic resin or thermoplastic polyester. Thus, in the embodiments of the present application, the first isolating component and/or the second isolating component is made of the thermoplastic resin or thermoplastic polyester that has high plasticity and relatively good chemical resistance and mechanical performance, so that the probability of particles or the like emitted from the battery falling into the gap between the two adjacent battery cells after thermal runaway occurs in the battery cells can be significantly lowered, and also the probability of problems such as insulation and thermal runaway occurring in the battery cells can be lowered, thus improving the overall performance of the battery.

In some embodiments, the filling components are made of one of the following materials: rubber, silicone, silicone adhesive, epoxy adhesive, and compressible foam.

In the embodiments of the present application, the material type of the filling components is set, so that an applicable material type can be flexibly used in different types of batteries, the probability of problems such as insulation and thermal runaway occurring in the battery cells can be lowered, and the manufacturing costs of the battery are reduced.

In some embodiments, the first isolating component and/or the second isolating component has a plate-shaped structure or a T-shaped structure having a protrusion, and at least a part of the protrusion fills an edge of the gap. Thus, in the embodiments of the present application, the first isolating component and/or the second isolating component is set to have a plate-shaped structure or a T-shaped structure having a protrusion, and at least a part of the protrusion fills the edge of the gap. In this way, the processing and assembling of the battery are facilitated, and the manufacturing costs are reduced.

According to a second aspect, an electric apparatus is provided, including the battery according to the first aspect or any one embodiment in the first aspect, where the battery is configured to provide electric energy for the electric apparatus.

### BRIEF DESCRIPTION OF THE DRAWINGS

FIG. 1 is a schematic structural diagram of a vehicle in an embodiment of the present application;
FIG. 2 is a schematic structural diagram of a battery in an embodiment of the present application;
FIG. 3 is a schematic structural diagram of a battery cell provided in an embodiment of the present application;
FIG. 4 is a schematic structural diagram of a battery provided in an embodiment of the present application;
FIG. 5 is a schematic structural diagram of another battery provided in an embodiment of the present application;
FIG. 6 is a schematic structural diagram of another battery provided in an embodiment of the present application;
FIG. 7 is a schematic structural diagram of another battery provided in an embodiment of the present application;
FIG. 8 is a schematic structural diagram of another battery provided in an embodiment of the present application;
FIG. 9 is a schematic structural diagram of another battery provided in an embodiment of the present application;
FIG. 10 is a schematic structural diagram of another battery provided in an embodiment of the present application;

Description of reference numerals: 1-Vehicle; 11-Motor; 12-Controller; 10-Battery; 100-Box body; 110-First box portion; 20-Battery cell; 120-Second box portion; 214-Electrode terminal; 214a-Positive electrode terminal; 214b-Negative electrode terminal; 212-Cover plate; 22-Electrode assembly; 23-Connecting member; 221a-First tab; 222a-Second tab; 211-Case; 213-Pressure relief mechanism; 215-Bottom wall; 310-First electrode terminal; 320-Second electrode terminal; 312-Third surface; 322-Fourth surface; 341-First filling component; 311-First surface; 321-Second surface; 31-First battery cell; 32-Second battery cell; 33-Functional component; 313-Fifth surface; 342-Second filling component; 323-Sixth surface; 34-Filling component; 35-Isolating component; 351-First isolating component; and 352-Second isolating component.

The drawings are not drawn to actual scale.

### DETAILED DESCRIPTION

The implementations of the present application will be further described in detail with reference to the drawings and embodiments. The following detailed description of the embodiments and the drawings are used to illustrate the principles of the present application by way of examples, but not to limit the scope of the present application, that is, the present application is not limited to the described embodiments.

In the description of the present application, it should be noted that, unless otherwise stated, "a plurality of' means two or more; and the orientations or positional relationships indicated by the terms "upper", "lower", "left", "right", "inside", "outside", and the like are merely intended to help describe the present application and simplify the description rather than indicate or imply that apparatuses or components referred to must have specific orientations, or be constructed and operated with the specific orientations, and therefore shall not be understood as limitations on the present application. In addition, the terms "first", "second", "third", and the like are used for descriptive purpose only and are not to be construed as indicating or implying relative importance. The term "perpendicular" does not mean perpendicular in a strict sense, but rather within an allowable range of error. The term "parallel" does not mean parallel in a strict sense, but rather within an allowable range of error.

The directional words appearing in the following description are all the directions shown in the drawings and are not intended to limit the specific structure of the present application. In the description of the present application, it should be noted that, unless otherwise explicitly specified or defined, the terms "mount", "link", and "connect" should be understood in a broad sense. For example, connection may be fixed connection, detachable connection, integral connection, mechanical connection, electrical connection, direct connection, or indirect connection via an intermediary. For those of ordinary skill in the art, the specific meanings of the above terms in the present application can be understood as the case may be.

In the present application, the term "and/or" merely indicates an association for describing associated objects, and indicates existence of three relationships. For example, A and/or B may indicate: A exists, both A and B exist, and B exists. In addition, the character "/" in the present application generally indicates that the associated objects before and after it are in an "or" relationship.

Unless otherwise defined, all technical and scientific terms used in the present application have the same meanings as commonly understood by those skilled in the technical field of the present application. The terms used in the specification of the present application are merely for the purpose of describing the specific embodiments, but are not intended to limit the present application. The terms "include", "comprise" and any variations thereof in the specification and claims of the present application and in the foregoing description of the accompanying drawings are intended to cover non-exclusive inclusion. In the specification and claims, or accompanying drawings of the present application, the terms "first", "second", and the like are intended to distinguish different objects rather than describe a specific order or primary and secondary relationship.

The reference to "embodiment" in the present application means that specific features, structures, or characteristics described with reference to the embodiments may be included in at least one embodiment of the present application. The term "embodiment" appearing at different positions of the specification does not necessarily refer to the same embodiment or an independent or alternative embodiment that is mutually exclusive with another embodiment. It is explicitly and implicitly understood by those skilled in the art that the embodiments described in the present application may be combined with other embodiments.

In the present application, a battery refers to a physical module including one or more battery cells for providing electric energy. For example, a battery mentioned in the present application may include a battery module, a battery pack, or the like. A battery generally includes a box body for packaging one or more battery cells. A box body may lower the probability of liquid or other foreign objects affecting charging or discharging of a battery cell.

Optionally, battery cells may include lithium-ion secondary cells, lithium-ion primary cells, lithium-sulfur cells, sodium lithium-ion cells, sodium-ion cells, magnesium-ion cells, or the like, which is not limited in the embodiments of the present application. A battery cell may be in a cylindrical shape, a flat shape, a cuboid shape, or other shapes, which is also not limited in the embodiments of the present application. Generally, depending on an encapsulating method, battery cells are divided into three types: columnar battery cells, prismatic battery cells, and pouch battery cells, which is also not limited in the embodiments of the present application.

A battery cell includes an electrode assembly and an electrolyte solution, and the electrode assembly is formed by a positive electrode plate, a negative electrode plate, and a separator. A battery cell works mainly relying on movement of metal ions between a positive electrode plate and a negative electrode plate. A positive electrode plate includes a positive electrode current collector and a positive electrode active material layer. A surface of the positive electrode current collector is coated with the positive electrode active material layer. A part of the current collector not coated with the positive electrode active material layer protrudes out of a part of the current collector coated with the positive electrode active material layer. The part of the current collector not coated with the positive electrode active material layer serves as a positive electrode tab. Taking a lithium-ion battery as an example, a positive electrode current collector may be made of aluminum, and a positive electrode active material may be lithium cobalt oxide, lithium iron phosphate, ternary lithium, lithium manganese oxide, or the like. A negative electrode plate includes a negative electrode current collector and a negative electrode active material layer. A surface of the negative electrode current collector is coated with the negative electrode active material layer. A part of the current collector not coated with the negative electrode active material layer protrudes from a part of the current collector coated with the negative electrode active material layer. The part of the current collector not coated with the negative electrode active material layer serves as a negative electrode tab. A negative electrode current collector may be made of copper, and a negative electrode active material may be carbon, silicon, or the like. To prevent fusing in case of a large current, a plurality of positive electrode tabs are provided and laminated, and a plurality of negative electrode tabs are provided and laminated. A separator may be made of polypropylene (PP), polyethylene (PE), or the like. In addition, an electrode assembly may be a winding type structure or a stacked structure, which is not limited in the embodiments of the present application.

The development of battery technology needs to simultaneously consider various design factors, for example, performance parameters such as energy density, cycle life, discharging capacity, and charging and discharging rate. In addition, the performance of safety, stability and the like of a battery also needs to be considered.

When a battery includes a plurality of battery cells, a gap usually exists between adjacent battery cells. When thermal runaway occurs in one battery cell, high-temperature gas, liquid, particles, or other effluents are emitted. The effluents may affect adjacent battery cells. For example, the emitted particles may fall into the gap between two battery cells, causing an insulation problem in the adjacent battery cells, and further causing problems such as thermal runaway in the adjacent battery cell.

Specifically, a functional component such as a cooling plate, an insulating pad, or a cushion pad may be arranged between adjacent battery cells. However, because a height difference between the functional component and the battery cells, and the functional component is usually arranged in a middle area between the battery cells, the height difference may cause a gap between the adjacent battery cells. The presence of the gap may cause increased probability of thermal runaway of a battery.

Based on the above, the embodiments of the present application provide a battery, including: a first battery cell and a second battery cell adjacent to each other, and a functional component. The functional component is arranged in a gap formed by a first surface of the first battery cell and a second surface of the second battery cell. The battery further includes filling components and/or a first isolating component. The filling components fill edges of the gap formed by the first surface and the second surface. The first isolating component is tightly attached to an edge of a third surface of the first battery cell and an edge of a fourth surface of the second battery cell, and covers the gap between the first surface and the second surface. The third surface intersects with the first surface, and the fourth surface intersects with the second surface. The gap between the adjacent battery cells is filled with the filling components, and/or the gap between the adjacent battery cells is covered with the isolating component. In this way, the probability of particles falling into the gap between the battery cells can be lowered, and the probability of problems such as insulation and thermal runaway occurring in the battery cells can be lowered, thus improving the overall performance of the battery.

The technical solutions described in the embodiments of the present application are all applicable to various apparatuses using batteries, such as mobile phones, portable devices, laptops, electric scooters, electric toys, electric tools, electric vehicles, ships and spacecrafts. For example, the spacecrafts include airplanes, rockets, space shuttles, space vehicles, and the like.

It should be understood that, the technical solutions described in the embodiments of the present application are not only applicable to the foregoing apparatuses, but also applicable to all apparatuses using batteries. However, for the sake of brevity, in the following embodiments, electric vehicles are used as an example for description.

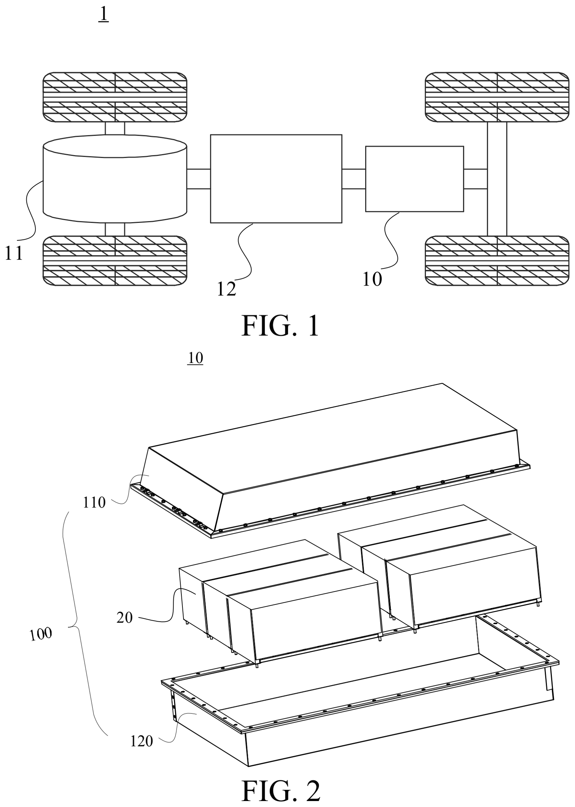

For example, as shown in FIG. 1 which is a schematic structural diagram of a vehicle 1 in an embodiment of the present application, the vehicle 1 may be a fuel vehicle, a gas vehicle or a new-energy vehicle. The new-energy vehicle may be a pure electric vehicle, a hybrid vehicle, an extended-range vehicle, or the like. A motor 11, a controller 12, and a battery 10 may be arranged inside the vehicle 1. The controller 12 is configured to the battery 10 to supply power to the motor 11. For example, the battery 10 may be arranged at the bottom, the front or the rear of the vehicle 1. The battery 10 may be used for supplying power to the vehicle 1. For example, the battery 10 may be used as an operating power source for the vehicle 1, and may be used for circuitry of the vehicle 1, for example, to meet working power demands when the vehicle 1 is started, navigated, and operated. In another embodiment of the present application, the battery 10 may not only serve as an operating power source for the vehicle 1, but also as a driving power source for the vehicle 1, to replace or partially replace fuel or natural gas to supply driving power to the vehicle 1.

In order to satisfy different power demands, the battery may include a plurality of battery cells. The plurality of battery cells may be connected in series, or in parallel, or in series-parallel. Being connected in series-parallel means a mixture of series connection and parallel connection. A battery may also be referred to as a battery pack. Optionally, a plurality of battery cells may be connected in series, or in parallel, or in series-parallel in advance to form a battery module, and a plurality of battery modules are further connected in series, or in parallel, or in series-parallel to form a battery. That is to say, a plurality of battery cells may directly form a battery, or they may form battery modules first, which then form a battery.

For example, as shown in FIG. 2 which is a schematic structural diagram of a battery 10 in an embodiment of the present application, the battery 10 may include a plurality of battery cells 20. The battery 10 may further include a box body 100 (or referred to as an enclosure). The interior of the box body 100 is a hollow structure, and the plurality of battery cells 20 are accommodated in the box body 100. As shown in FIG. 2, the box body 100 may include two portions, which are referred to as a first box portion 110 and a second box portion 120 respectively. The first box portion 110 and the second box portion 120 fit together. The shapes of the first box portion 110 and the second box portion 120 may be determined according to the shape of the plurality of battery cells 20 combined. Each of the first box portion 110 and the second box portion 120 may have an opening. For example, both the first box portion 110 and the second box portion 120 may be hollow cuboid, each having only one open side. The opening of the first box portion 110 and the opening of the second box portion 120 are arranged opposite to each other, and the first box portion 110 and the second box portion 120 fit each other to form the box body with a closed chamber. The plurality of battery cells 20 are connected to one another in parallel, or in series, or in series-parallel, and then placed in the box body 100 formed by the first box portion 110 and the second box portion 120 fitted together.

Optionally, the battery 10 may further include other structures, and descriptions thereof are omitted herein. For example, the battery 10 may further include a busbar component for realizing electrical connection between the plurality of battery cells 20, e.g., in parallel, or in series, or in series-parallel. Specifically, the busbar component may be connected to electrode terminals of the battery cells 20 to achieve electrical connection between the battery cells 20. Furthermore, the busbar component may be fixed to the electrode terminals of the battery cells 20 by welding. The electric energy of the plurality of battery cells 20 may be further led out through the box body via an electric conductive mechanism. Optionally, the electric conductive mechanism may also belong to the bus component.

According to different power demands, the number of the battery cells 20 may be set to any numerical value. The plurality of battery cells 20 may be connected in series, or in parallel, or in series-parallel to achieve a greater capacity or power. Since the number of the battery cells 20 included in each battery 10 may be large, to facilitate mounting, the battery cells 20 may be arranged in groups, and each group of battery cells 20 forms a battery module. The number of the battery cells 20 included in each group of battery cells 20 is not limited and may be set as required.

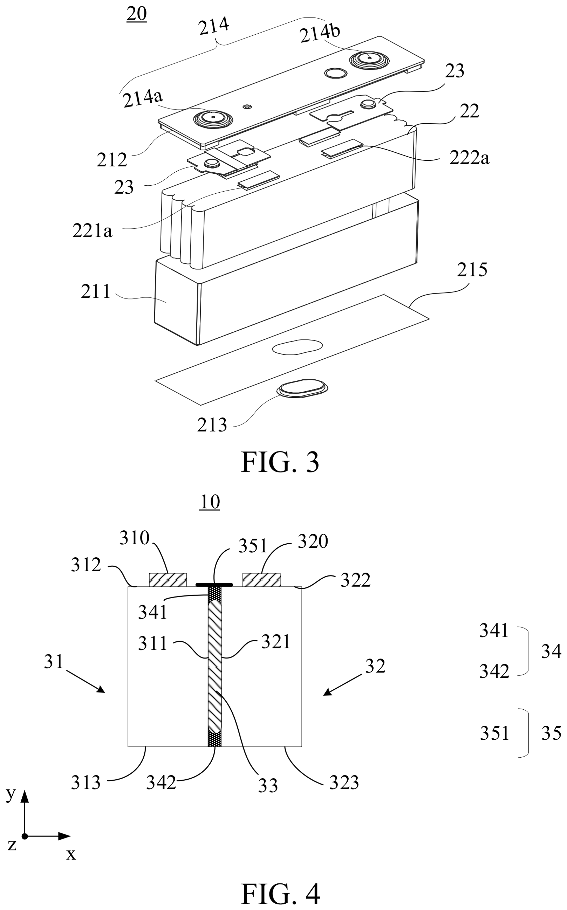

FIG. 3 is a schematic structural diagram of a battery cell 20 in an embodiment of the present application.

As shown in FIG. 3, the battery cell 20 includes one or more electrode assemblies 22, a case 211, and a cover plate 212. The wall of the case 211 and the cover plate 212 are both referred to as the walls of the battery cells 20. The case 211 is shaped according to the shape of one or more electrode assemblies 22 combined. For example, the case 211 may be a hollow cuboid or cube or cylinder. Moreover, the case 211 has an opening on one side such that the one or more electrode assemblies 22 can be placed in the case 211. For example, when the case 211 is a hollow cuboid or cube, one plane of the case 211 is an opening side. That is, the plane does not have a wall, so that the inside of the case 211 is communicated with the outside. When the case 211 is a hollow cylinder, an end surface of the case 211 is an opening side. That is, the end surface does not have a wall, so that the inside of the case 211 is communicated with the outside. The cover plate 212 covers the opening and is connected to the case 211 to form a closed chamber for placement of the electrode assemblies 22. The case 211 is filled with an electrolyte, such as an electrolytic solution.

The battery cell 20 may further include two electrode terminals 214. The two electrode terminals 214 may be arranged on the cover plate 212. The cover plate 212 is generally in the shape of a flat plate. The two electrode terminals 214 are fixed to a flat plate surface of the cover plate 212. The two electrode terminals 214 are a positive electrode terminal 214a and a negative electrode terminal 214b, respectively. Each electrode terminal 214 is correspondingly provided with a connecting member 23 (also referred to as a current collecting member), which is located between the cover plate 212 and the electrode assemblies 22 and configured to electrically connect the electrode assemblies 22 to the electrode terminals 214.

As shown in FIG. 3, each electrode assembly 22 includes a first tab 221a and a second tab 222a. The first tab 221a and the second tab 222a have opposite polarities. For example, when the first tab 221a is a positive electrode tab, the second tab 222a is a negative electrode tab. The first tabs 221a of one or more electrode assemblies 22 are connected to one electrode terminal via one connecting member 23. The second tabs 222a of one or more electrode assemblies 22 are connected to the other electrode terminal via another connecting member 23. For example, the positive electrode terminal 214a is connected to a positive electrode tab via one connecting member 23. The negative electrode terminal 214b is connected to a negative electrode tab via the other connecting member 23.

In the battery cell 20, based on actual use requirements, one or more electrode assemblies 22 may be arranged. As shown in FIG. 3, four separate electrode assemblies 22 are arranged in the battery cells 20.

By way of example, a pressure relief mechanism 213 may be further arranged on a wall of the battery cell 20. The pressure relief mechanism 213 is configured to actuate when an internal pressure or temperature of the battery cell 20 reaches a threshold, to reduce the internal pressure or temperature.

Optionally, in an embodiment of the present application, the pressure relief mechanism 213 and the electrode terminals 214 are arranged on different walls of the battery cell 20. As an example, as shown in FIG. 3, the electrode terminals 214 of the battery cell 20 may be arranged on the top wall, namely, the cover plate 212, of the battery cell 20. The pressure relief mechanism 213 is arranged on another wall different from the top wall in the battery cell 20. For example, the pressure relief mechanism 213 is arranged on a bottom wall 215 opposite to the top wall. For ease of presentation, the bottom wall 215 is separated from the case 211 in FIG. 3, which does not limit that the bottom side of the case 211 has an opening.

Optionally, in another embodiment of the present application, the pressure relief mechanism 213 and the electrode terminals 214 are arranged on the same wall of the battery cell 20. For example, both the electrode terminals 214 and the pressure relief mechanism 213 may be arranged on the top wall, namely, the cover plate 212, of the battery cell 20.

The pressure relief mechanism 213 may be integrated as a part of the wall where it is located, or may be a separate structure from the wall where it is located and fixed to that wall by means of, for example, welding. For example, in the embodiment shown in FIG. 3, when the pressure relief mechanism 213 is a part of the bottom wall 215, the pressure relief mechanism 213 may be formed by providing a score line on the bottom wall 215, and the thickness of the bottom wall 215 corresponding to the score line is less than the thickness of other areas than the score line of the pressure relief mechanism 213. The score line is the weakest position of the pressure relief mechanism 213. When an excessive amount of gas is generated in the battery cell 20, causing an internal pressure of the case 211 to increase and reach a threshold, or when heat is generated by a reaction in the battery cell 20 and causes the temperature in the battery cell 20 to increase and reach a threshold, the pressure relief mechanism 213 may rupture at the score line to cause the inside of the case 211 to communicate with the outside, and the pressure and heat of the gas are released to the outside from the rupture of the pressure relief mechanism 213, thereby reducing the probability of explosion occurring in the battery cell 20.

In addition, the pressure relief mechanism 213 may be various possible pressure relief mechanisms, which is not limited in the embodiments of the present application. For example, the pressure relief mechanism 213 may be a temperature-sensitive pressure relief mechanism, and the temperature-sensitive pressure relief mechanism is configured to melt when the internal temperature of the battery cell 20 provided with the pressure relief mechanism 213 reaches a threshold; and/or, the pressure relief mechanism 213 may be a pressure-sensitive pressure relief mechanism, and the pressure-sensitive pressure relief mechanism is configured to rupture when an internal air pressure of the battery cell 20 provided with the pressure relief mechanism 213 reaches a threshold.

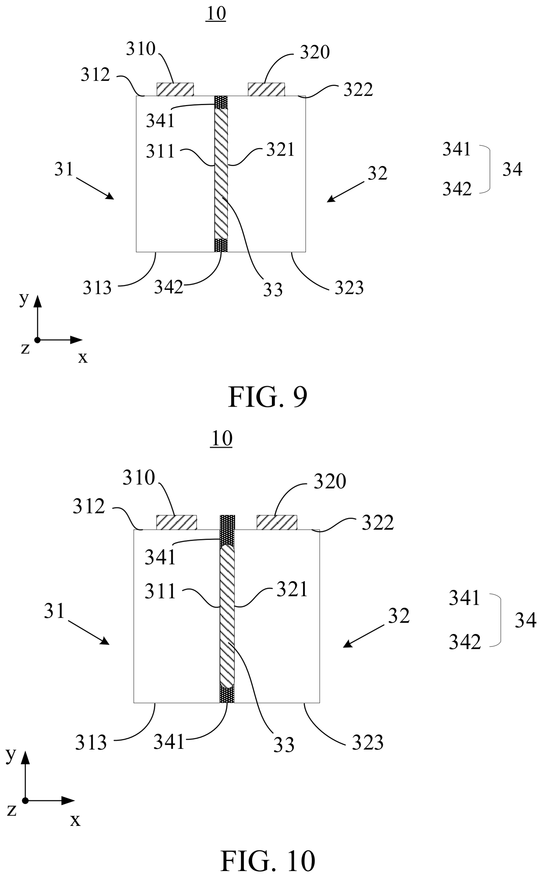

The schematic structural diagram of the battery cell 20 provided in an embodiment of the present application is explained with reference to FIG. 3. A battery provided in the embodiments of the present application will be explained below with reference to FIG. 4 to FIG. 10. FIG. 4 to FIG. 10 show cross-sectional views of a battery 10. It should be noted that, in some embodiments, for a specific structure of the battery 10, reference may be made to the descriptions in FIG. 1 to FIG. 3.

As shown in FIG. 4 to FIG. 10, the embodiments of the present application provide a battery 10. The battery 10 includes a first battery cell 31 and a second battery cell 32 adjacent to each other, a functional component 33, and filling components 34 and/or a first isolating component 351. The functional component 33 is arranged in a gap formed by a first surface 311 of the first battery cell 31 and a second surface 321 of the second battery cell 32. The filling components 34 fill edges of the gap formed by the first surface 311 and the second surface 321. The first isolating component 351 is tightly attached to an edge of a third surface 312 of the first battery cell 31 and an edge of a fourth surface 322 of the second battery cell 32, and covers the gap between the first surface 311 and the second surface 321. The third surface 312 intersects with the first surface 311, and the fourth surface 322 intersects with the second surface 321.

In the embodiments of the present application, the battery 10 may include at least two battery cells 20, for example, the first battery cell 31 and the second battery cell 32 in FIG. 4 to FIG. 10.

The functional component 33 is arranged between the first battery cell 31 and the second battery cell 32, and is a component that may play a particular role to improve the overall performance of the battery 10. For example, the functional component may be an insulating pad, a cooling plate, or a cushion pad.

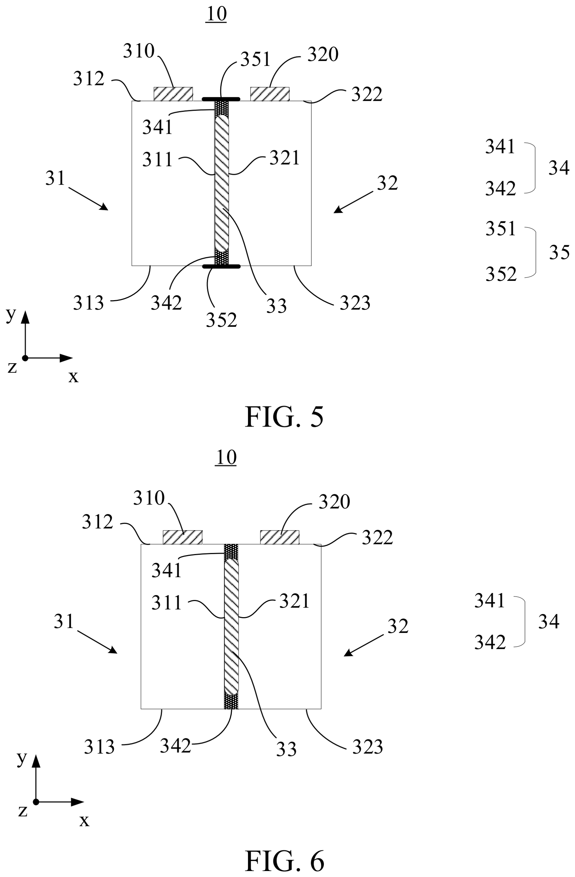

The battery 10 may include both the filling components 34 and the first isolating component 351, for example, as shown in FIG. 4 and FIG. 5, or may include either of the two, for example, as shown in FIG. 6 to FIG. 10. For example, the battery 10 may include the filling components 34. For another example, the battery 10 may include the first isolating component 351, which is not limited in the present application.

The first surface 311 and the third surface 312, as well as the second surface 321 and the fourth surface 322 are respectively external surfaces of the first battery cell 31 and the second battery cell 32. The first surface 311 and the second surface 321 are surfaces that form the gap between the two battery cells 20, or in other words two surfaces that are closest to each other on the two battery cells 20.

That the functional component 33 is arranged in the gap between the adjacent battery cells 20 may be understood as that the functional component 33 is arranged in a central area or an area at either end between the first surface 311 and the second surface 321. That is, there is a height difference between the functional component 33 and the battery cells 20, and the functional component cannot completely occupy the entire area of the gap between the adjacent battery cells 20. In addition, the functional component 33 may be tightly attached to the first surface 311 and the second surface 321, or may have a gap with the first surface 311 and/or the second surface 321, i.e., between the functional component and the first surface 311 and/or the second surface 321. Optionally, a pressure relief mechanism, for example, the pressure relief mechanism 213 shown in FIG. 3, may be arranged on the first surface 311 and the second surface 321.

The third surface 312 intersects with the first surface 311. For example, for a prismatic battery cell 20, the third surface 312 and the first surface 311 are substantially perpendicular to each other and are connected. Similarly, the fourth surface 322 intersects with the second surface 321. For a prismatic battery cell 20, the fourth surface 322 and the second surface 321 are substantially perpendicular to each other.

The number of the filling components 34 may be one or more than one, for example two, which is not limited in the present application. Similarly, the number of isolating components 35 may be one or more than one, for example two, which is not limited in the present application.

The gap between adjacent battery cells 20 is filled with the filling components 34, and/or the gap between adjacent battery cells 20 is covered with the isolating component 35. In this way, the probability of particles falling into the gap between the battery cells 20 can be lowered, and the probability of problems such as insulation and thermal runaway occurring in the battery cells 20 can be lowered, thus improving the overall performance of the battery 10.

In some implementations, the filling components 34 fill other areas in the gap than an area occupied by the functional component 33.

For example, the filling components 34 may be set, based on the shape of the functional component 33, to have a shape that matches or fits the functional component 33 to fill edge gaps. In other words, the filling components 34 and the functional component 33 occupy the entire area of the gap between the two adjacent battery cells 20.

The filling components 34 are arranged in the other areas than the area occupied by the functional component 33 to completely fill the gap between two adjacent battery cells 20. In this way, the expansion uniformity of the battery cells 20 can be improved, and further the cycle performance of the battery 10 is improved. Meanwhile, the probability of emitted particles or the like falling into the gap between two adjacent battery cells 20 after thermal runaway occurs in one battery cell 20 can be lowered, and the probability of problems such as insulation and thermal runaway occurring in the battery cells 20 can be lowered, thus improving the overall performance of the battery 10.

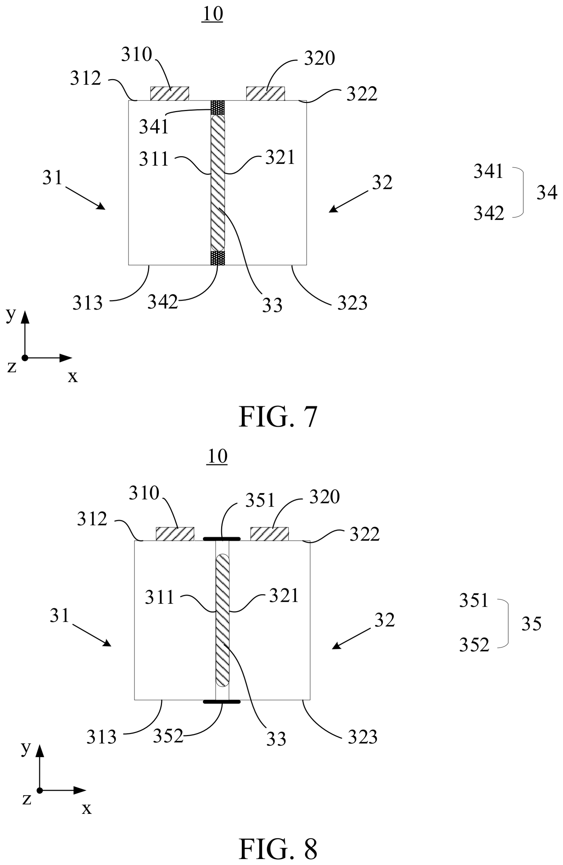

Optionally, the filling components 34 may also not match the functional component 33 in shape. For example, in FIG. 7, two ends of the functional component 33 are arc-shaped. The filling components 34 are rectangular, and after filling the edge gaps, are tangent to the functional component 33.

It should be understood that the different areas of the gap between two adjacent battery cells 20 in the battery 10 may all be filled with the filling components 34. For example, in FIG. 4, in addition to two edge gaps in the y-direction being filled with the filling components 34, at least one edge gap in the z-direction may also be filled with the filling component 34, where the x-direction, the y-direction, and the z direction are perpendicular to each other.

It should be noted that the edge gaps between two adjacent battery cells 20 in the battery 10 are caused by the functional component 33 arranged between two battery cells 20. Because a height difference between the functional component 33 and the battery cells 20, the functional components 33 cannot completely fill the gap between the battery cells 20.

In some implementations, a pressure relief mechanism is arranged on the third surface 312 of the first battery cell 31, and/or a pressure relief mechanism is arranged on the fourth surface 322 of the second battery cell 32. The filling components 34 and/or the first isolating component 351 is arranged close to the pressure relief mechanism relative to the functional component 33. For example, the pressure relief mechanism may be the pressure relief mechanism 213 as shown in FIG. 3.

In the embodiments of the present application, the pressure relief mechanism is arranged on the third surface 312 of the first battery cell 31, and/or the pressure relief mechanism is arranged on the fourth surface 322 of the second battery cell 32, and the filling components 34 and/or the first isolating component 351 is arranged close to the pressure relief mechanism relative to the functional component 33. In this way, after thermal runaway occurs in the battery cells 20, the probability of particles or the like emitted by the pressure relief mechanism falling into the gap between two adjacent battery cells 20 can be significantly lowered, and the probability of problems such as insulation and thermal runaway occurring in the battery cells 20 can be lowered, thus improving the overall performance of the battery 10.

In some implementations, the melting point of the filling components 34 and/or the first isolating component 351 is greater than or equal to 100°C. Thus, in the embodiments of the present application, the melting point of the filling components 34 and/or the first isolating component 351 is set to greater than or equal to 100°C. In this way, when thermal runaway occurs in the battery cells 20, the probability of problems such as insulation and thermal runaway caused by emitted particles or the like falling between two adjacent battery cells 20 can be effectively lowered, thus improving the overall performance of the battery 10.

In some implementations, the filling components 34 are arranged to protrude from the third surface 312 of the first battery cell 31 and/or the fourth surface 322 of the second battery cell 32. Thus, in the embodiments of the present application, the filling components 34 are arranged to protrude from the third surface 312 of the first battery cell 31 and/or the fourth surface 322 of the second battery cell 32. In this way, the probability of emitted particles or the like falling into the gap between two adjacent battery cells 20 in the case that thermal runaway occurs in the battery cells 20 can be further lowered, and also the probability of problems such as insulation and thermal runaway occurring in the battery cells 20 can be lowered, thus improving the overall performance of the battery 10.

In some implementations, a first electrode terminal 310 is arranged on the third surface 312 of the first battery cell 31, and/or a second electrode terminal 320 is arranged on the fourth surface 322 of the second battery cell 32. The filling components 34 are arranged so as not to be higher than the first electrode terminal 310 and/or the second electrode terminal 320. For example, the first electrode terminal 310 and/or the second electrode terminal 320 may be the electrode terminals 214 as shown in FIG. 3.

In the embodiments of the present application, the first electrode terminal 310 is arranged on the third surface 312 of the first battery cell 31, and/or the second electrode terminal 320 is arranged on the fourth surface 322 of the second battery cell 32, and the filling components 34 are arranged so as not to be higher than the first electrode terminal 310 and/or the second electrode terminal 320. In this way, the impact of the filling components 34 on the first electrode terminal 310 and/or the second electrode terminal 320 is reduced, the processing and manufacturing of the battery 10 are facilitated, the probability of emitted high-temperature particles or the like falling into the gap between the two adjacent battery cells 20 in the case that thermal runaway occurs in the battery cells 20 can be lowered, and the probability of problems such as insulation and thermal runaway occurring in the battery cells 20 can be lowered, thus improving the overall performance of the battery 10.

In some implementations, the filling components 34 are arranged flush with the first electrode terminal 310 and/or the second electrode terminal 320. Thus, in the embodiments of the present application, the filling components 34 are arranged flush with the first electrode terminal 310 and/or the second electrode terminal 320. In this way, the processing and manufacturing of the battery 10 are facilitated, and the production costs are reduced.

In some implementations, the functional component 33 is arranged in a middle area between the first surface 311 and the second surface 321. The filling components 34 include a first filling component 341 and a second filling component 342. The first filling component 341 and the second filling component 342 are arranged in at least one of two edge gaps between the first surface 311 and the second surface 321.

In the embodiments of the present application, the first filling component 341 and the second filling component 342 are arranged in at least one of two edge gaps between the first surface 311 and the second surface 321. In this way, the probability of emitted high-temperature particles or the like falling into the gap between the two adjacent battery cells 20 in the case that thermal runaway occurs in the battery cells 20 can be significantly lowered, and the probability of problems such as insulation and thermal runaway occurring in the battery cells 20 can be lowered, thus improving the overall performance of the battery 10.

In some implementations, the first filling component 341 is flush with the third surface 312 and the fourth surface 322, and/or the second filling component 342 is flush with a fifth surface 313 of the first battery cell 31 and a sixth surface 323 of the second battery cell 32. The third surface 312 is arranged opposite to the fifth surface 313, and the fourth surface 322 is arranged opposite to the sixth surface 323.

After filling the edge gap, the filling component 34 may be arranged flush with surfaces of the battery cells close to the edge. For example, as shown in FIG. 4 to FIG. 10, for ease of understanding, direction words such as "upper" and "lower" are used herein for description with reference to the accompanying drawings. The upper first filling component 341 may be flush with the upper third surface 312 and fourth surface 322, and the lower second filling component 342 may be flush with the lower fifth surface 313 and sixth surface 323. Or, in the y-direction, the first filling component 341 and the second filling component 342 fill the upper and lower edge gaps respectively, and are arranged flush with the corresponding surfaces.

For a prismatic battery cell 20, the third surface 312 may be parallel to the fifth surface 313, and the fourth surface 322 may be parallel to the sixth surface 323.

The filling components 34 are arranged flush with the surfaces of the battery cells 20. In this way, the probability of emitted particles or the like falling into the gap between the two adjacent battery cells 20 after thermal runaway occurs in one battery cell 20 can be lowered, and the probability of problems such as insulation and thermal runaway occurring in the battery cells 20 can be lowered, thus improving the overall performance of the battery 10.

In some implementations, the pressure relief mechanism is arranged on the third surface 312 of the first battery cell 31, and/or the pressure relief mechanism is arranged on the fourth surface 322 of the second battery cell 32. One of the first filling component 341 and the second filling component 342 is close to the pressure relief mechanism, and the other is far away from the pressure relief mechanism. The melting point of the one close to the pressure relief mechanism is higher than the melting point of the other far away from the pressure relief mechanism.

In the embodiments of the present application, one of the first filling component 341 and the second filling component 342 is close to the pressure relief mechanism, the other is far away from the pressure relief mechanism, and the melting point of the one close to the pressure relief mechanism is higher than the melting point of the other far away from the pressure relief mechanism. In this way, after thermal runaway occurs in the battery cells 20, the probability of particles or the like emitted by the pressure relief mechanism falling into the gap between two adjacent battery cells 20 can be significantly lowered, and the probability of problems such as insulation and thermal runaway occurring in the battery cells 20 can be lowered, thus improving the overall performance of the battery 10, and reducing manufacturing costs of the battery 10.

In the embodiments of the present application, as shown in FIG. 5, the battery 10 further includes a second isolating component 352. The second isolating component 352 is tightly attached to an edge of the fifth surface 313 of the first battery cell 31 and an edge of the sixth surface 323 of the second battery cell 32, and covers the gap between the first surface 311 and the second surface 321. The fifth surface 313 intersects with the first surface 311, and the sixth surface 323 intersects with the second surface 321. The third surface 312 is arranged opposite to the fifth surface 313, and the fourth surface 322 is arranged opposite to the sixth surface 323.

For ease of understanding, direction words such as "upper" and "lower" may be used for description with reference to the accompanying drawings. As shown in FIG. 5, in addition to the upper first isolating component 351, the battery 10 may further include the lower second isolating component 352.

The second isolating component 352 is arranged to further cover the gap between adjacent battery cells 20, so that fewer particles generated by thermal runaway or the like enters the gap between adjacent battery cells 20, and the probability of problems such as insulation and thermal runaway occurring in the battery cells 20 can be lowered, thus further improving the overall performance of the battery 10.

In some embodiments, the first isolating component 351 and/or the second isolating component 352 is made of thermoplastic resin or thermoplastic polyester. For example, the first isolating component 351 and/or the second isolating component 352 is made of, but not limited to, polypropylene, polyethylene terephthalate, polybutylene terephthalate, polyphenylene sulfide, and polyformaldehyde.

In the embodiments of the present application, the first isolating component 351 and/or the second isolating component 352 is made of the thermoplastic resin or thermoplastic polyester that has high plasticity and relatively good chemical resistance and mechanical performance. In this way, the probability of particles or the like emitted from the battery 10 falling into the gap between the two adjacent battery cells 20 after thermal runaway occurs in the battery cells 20 can be significantly lowered, and the probability of problems such as insulation and thermal runaway occurring in the battery cells 20 can be lowered, thus improving the overall performance of the battery 10.

In the embodiments of the present application, the filling components 34 are made of one of the following materials: rubber, silicone, silicone adhesive, epoxy adhesive, and compressible foam.

The rubber includes ethylene propylene diene monomer (EPDM) rubber, silicon rubber, and the like. The filling adhesive is an adhesive that can be cured in response to air or light waves, for example, a foaming adhesive, a structural adhesive, a silicon adhesive, and a gap filler. The compressible foam includes, for example, polyurethane foam and melamine foam.

In the embodiments of the present application, the material type of the filling components 34 is set, so that an applicable material type can be flexibly used in different types of batteries 10, the probability of problems such as insulation and thermal runaway occurring in the battery cells 20 can be lowered, and the manufacturing costs of the battery 10 are reduced.

In some implementations, the first isolating component 351 and/or the second isolating component 352 has a plate-shaped structure or a T-shaped structure having a protrusion, and at least a part of the protrusion fills an edge of the gap. Thus, in the embodiments of the present application, the first isolating component 351 and/or the second isolating component 352 is set to have a plate-shaped structure or a T-shaped structure having a protrusion, and at least a part of the protrusion fills the edge of the gap. In this way, the processing and assembling of the battery 10 are facilitated, and the manufacturing costs are reduced.

An embodiment of the present application further provides an electric apparatus, including the battery 10 in the foregoing embodiments. The battery 10 is configured to provide electric energy to the electric apparatus.

Optionally, the electric apparatus may be a vehicle 1, a ship, or a spacecraft.

Referring to FIG. 4 again, the embodiments of the present application provide a battery 10. The battery 10 includes a first battery cell 31 and a second battery cell 32 adjacent to each other, a functional component 33, and filling components 34 and/or a first isolating component 351. The functional component 33 is arranged in a gap formed by a first surface 311 of the first battery cell 31 and a second surface 321 of the second battery cell 32. The filling components 34 fill other areas, than an area occupied by the functional component 33, in the gap formed by the first surface 311 and the second surface 321, and are arranged flush with a third surface 312 of the first battery cell 31 and a fourth surface 322 of the second battery cell 32. The first isolating component 351 is tightly attached to an edge of the third surface 312 of the first battery cell 31 and an edge of the fourth surface 322 of the second battery cell 32, and covers the gap between the first surface 311 and the second surface 321. The third surface 312 intersects with the first surface 311, and the fourth surface 322 intersects with the second surface 321.

Although the present application has been described with reference to the foregoing embodiments, various improvements can be made thereto and equivalents can be substituted for components thereof without departing from the scope of the present application. In particular, the technical features mentioned in the embodiments can be combined in any way provided that there is no structural conflict. The present application is not limited to the specific embodiments disclosed herein, but includes all technical solutions that fall within the scope of the claims.

## Claims

1. A battery (10), comprising:
a first battery cell (31) and a second battery cell (32) adjacent to each other, and a functional component (33), the functional component (33) being arranged in a gap formed by a first surface (311) of the first battery cell (31) and a second surface (321) of the second battery cell (32); and
filling components (34) and/or a first isolating component (351), the filling components (34) filling edges of the gap; the first isolating component (351) being tightly attached to an edge of a third surface (312) of the first battery cell (31) and an edge of a fourth surface (322) of the second battery cell (32), and covering the gap formed by the first surface (311) and the second surface (321), the third surface (312) intersecting with the first surface (311), and the fourth surface (322) intersecting with the second surface (321).

2. The battery according to claim 1, wherein the filling components (34) fill other areas in the gap than an area occupied by the functional component (33).

3. The battery according to claim 1 or 2, wherein a pressure relief mechanism is arranged on the third surface (312) of the first battery cell (31), and/or a pressure relief mechanism is arranged on the fourth surface (322) of the second battery cell (32), wherein
the filling components (34) and/or the first isolating component (351) is arranged close to the pressure relief mechanism relative to the functional component (33).

4. The battery according to any one of claims 1 to 3, wherein the melting point of the filling components (34) and/or the first isolating component (351) is greater than or equal to 100°C.

5. The battery according to any one of claims 1 to 4, wherein the filling components (34) are arranged to protrude from the third surface (312) of the first battery cell (31) and/or the fourth surface (322) of the second battery cell (32).

6. The battery according to claim 5, wherein a first electrode terminal (310) is arranged on the third surface (312) of the first battery cell (31), and/or a second electrode terminal (320) is arranged on the fourth surface (322) of the second battery cell (32), wherein
the filling components (34) are arranged so as not to be higher than the first electrode terminal (310) and/or the second electrode terminal (320).

7. The battery according to claim 6, wherein the filling components (34) are arranged flush with the first electrode terminal (310) and/or the second electrode terminal (320).

8. The battery according to any one of claims 1 to 7, wherein the functional component (33) is arranged in a middle area between the first surface (311) and the second surface (321); and
the filling components (34) comprise a first filling component (341) and/or a second filling component (342), the first filling component (341) and the second filling component (342) being arranged in at least one of two edge gaps between the first surface (311) and the second surface (321).

9. The battery according to claim 8, wherein the first filling component (341) is flush with the third surface (312) and the fourth surface (322), and/or the second filling component (342) is flush with a fifth surface (313) of the first battery cell (31) and a sixth surface (323) of the second battery cell (32), wherein
the third surface (312) is arranged opposite to the fifth surface (313), and the fourth surface (322) is arranged opposite to the sixth surface (323).

10. The battery according to claim 8 or 9, wherein the pressure relief mechanism is arranged on the third surface (312) of the first battery cell (31), and/or the pressure relief mechanism is arranged on the fourth surface (322) of the second battery cell (32); and
one of the first filling component (341) and the second filling component (342) is close to the pressure relief mechanism, and the other is far away from the pressure relief mechanism, the melting point of the one close to the pressure relief mechanism being higher than the melting point of the other far away from the pressure relief mechanism.

11. The battery according to any one of claims 1 to 10, further comprising a second isolating component (352), the second isolating component (352) being tightly attached to an edge of the fifth surface (313) of the first battery cell (31) and an edge of the sixth surface (323) of the second battery cell (32), and covering the gap between the first surface (311) and the second surface (321), the fifth surface (313) intersecting with the first surface (311), and the sixth surface (323) intersecting with the second surface (321), wherein
the third surface (312) is arranged opposite to the fifth surface (313), and the fourth surface (322) is arranged opposite to the sixth surface (323).

12. The battery according to claim 11, wherein the first isolating component (351) and/or the second isolating component (352) is made of thermoplastic resin or thermoplastic polyester.

13. The battery according to any one of claims 1 to 12, wherein the filling components (34) are made of one of the following materials: rubber, silicone, silicone adhesive, epoxy adhesive, and compressible foam.

14. The battery according to claim 11 or 12, wherein the first isolating component (351) and/or the second isolating component (352) has a plate-shaped structure or a T-shaped structure having a protrusion, at least a part of the protrusion filling an edge of the gap.

15. An electric apparatus, comprising the battery (10) according to any one of claims 1 to 14, wherein the battery (10) is configured to provide electric energy for the electric apparatus.
